# EUROPÄISCHE PATENTSCHRIFT

(11) **EP 2 235 724 B1**
(45) Veröffentlichungstag und Bekanntmachung des Hinweises auf die Patenterteilung: **19.11.2014**
(21) Anmeldenummer: 08864792.0
(22) Anmeldetag: 17.12.2008
(51) Int. Cl.: B03C 1/033, H01F 1/44, B03C 1/015

(54) **ANWENDUNG MAGNETISCHER, IONISCHER FLÜSSIGKEITEN ALS EXTRAKTIONSMITTEL**
USE OF MAGNETIC, IONIC LIQUIDS AS AN EXTRACTION AGENT
UTILISATION DE LIQUIDES IONIQUES MAGNÉTIQUES EN TANT QU'AGENTS D'EXTRACTION

(30) Priorität: 20.12.2007 US 15469
(43) Veröffentlichungstag der Anmeldung: 06.10.2010
(73) Patentinhaber: proionic GmbH & Co KG, 8074 Grambach (AT)
(72) Erfinder: KALB, Roland, A-8700 Leoben (AT)
(74) Vertreter: Vinazzer, Edith
(86) Internationale Anmeldenummer: PCT/EP2008/067731
(87) Internationale Veröffentlichungsnummer: WO 2009/080648

(56) Entgegenhaltungen:
- WO-A-2007/094739
- GUERRERO-SANCHEZ CARLOS ET AL: "Magnetorheological fluids based on ionic liquids" ADVANCED MATERIALS, WILEY VCH, WEINHEIM, DE, Bd. 19, Nr. 13, 2. Juli 2007 (2007-07-02), Seiten 1740-1747, XP002469602 ISSN: 0935-9648
- N. VON PRONDZINSKI: "[(bmpyr)2{Zn(OC6H3(NO2)2)4}]: Influence of an ionic liquid on liquid/liquid extraction of metal ions in a biphasic system" ZEITSCHRIFT FÜR ANORGANISCHE UND ALLGEMEINE CHEMIE, Bd. 633, Nr. 9, August 2007 (2007-08), Seiten 1490-1492, XP002519344
- YOSHIDA Y ET AL: "Influence of structural variations in 1-alkyl-3-methylimidazolium cation and tetrahalogenoferrate(III) anion on the physical properties of the paramagnetic ionic liquids" JOURNAL OF MATERIALS CHEMISTRY, THE ROYAL SOCIETY OF CHEMISTRY, CAMBRIDGE, GB, Bd. 16, 9. Januar 2006 (2006-01-09), Seiten 1254-1262, XP002440870 ISSN: 0959-9428
- HAYASHI S ET AL: "DISCOVERY OF A MAGNETIC IONIC LIQUID ÄBMIMÜFECL4" CHEMISTRY LETTERS, CHEMICAL SOCIETY OF JAPAN. TOKYO, Bd. 33, Nr. 12, 1. Januar 2004 (2004-01-01), Seite 1590/1591, XP008066931 ISSN: 0366-7022 in der Anmeldung erwähnt

## Beschreibung

Die Erfindung betrifft die Verwendung *para*magnetischer ionischer Flüssigkeiten zur Extraktion, insbesondere zur flüssig-flüssig, flüssig-fest oder flüssiggasförmig Extraktion, wobei die Trennung der Phasen in einem Magnetfeld stattfindet.

### Gebiet der Erfindung:

Ionische Flüssigkeiten sind - im Sinne der anerkannten Literatur (z.B. Wasserscheid, Peter; Welton, Tom (Eds.); "Ionic Liquids in Synthesis", Verlag Wiley-VCH 2003; ISBN 3-527-30515-7; Rogers, Robin D.; Seddon, Kenneth R. (Eds.); "Ionic Liquids - Industrial Applications to Green Chemistry", ACS Symposium Series 818, 2002; ISBN 0841237891") - flüssige organische Salze oder Salzgemische bestehend aus organischen Kationen und organischen oder anorganischen Anionen, mit Schmelzpunkten von unter 100°C. In diesen Salzen können zusätzlich anorganische Salze gelöst sein und des Weiteren auch molekulare Hilfsstoffe. Im Sinne dieser Anmeldung wird die willkürlich mit 100°C festgelegte Grenze des Schmelzpunktes ionischer Flüssigkeiten im weiteren Sinne gesehen und es werden somit auch solche Salzschmelzen eingeschlossen, die einen Schmelzpunkt von über 100°C, aber unter 200°C haben. Sie unterscheiden sich nämlich ansonsten nicht in ihren Eigenschaften.

Ionische Flüssigkeiten weisen äußerst interessante Eigenschaften auf, wie beispielsweise einen sehr geringen bis nahezu nicht messbaren Dampfdruck, einen sehr großen Liquidusbereich, gute elektrische Leitfähigkeit und ungewöhnliche Solvatations-Eigenschaften. Diese Eigenschaften prädestinieren sie für den Einsatz in verschiedenen Bereichen technischer Anwendungen. So können sie beispielsweise als Lösungsmittel (bei organischer und anorganischer Synthese im Allgemeinen, bei der Übergangsmetallkatalyse, der Biokatalyse, der Phasentransfer-Katalyse, bei Mehrphasen-Reaktionen, in der Photochemie, in der Polymersynthese und der Nanotechnologie), als Extraktionsmittel (bei der flüssig-flüssig- und der flüssig-gasförmigen-Extraktion im Allgemeinen, der Entschwefelung von Rohöl, der Entfernung von Schwermetallen aus Abwässern, der Flüssigmembranextraktion), als Elektrolyte (in Batterien, Brennstoffzellen, Kondensatoren, Solarzellen, Sensoren, in der Elektrochromie, der Galvanotechnik, in der elektrochemischen Metallbearbeitung, in der elektrochemischen Synthese im Allgemeinen, bei der elektroorganischen Synthese, der Nanotechnologie), als Schmierstoffe, als Thermofluide, als Gele, als Reagenzien zur organischen Synthese, in der "Green Chemistry" (Ersatz für Volatile Organic Compounds), als Antistatika, in Spezialanwendungen der Analytik (Gaschromatographie, Massenspektroskopie, Kapillarzonenelektrophorese), als Flüssigkristalle, etc. (unvollständige Aufzählung) eingesetzt werden. Diesbezüglich wird beispielsweise auf "Rogers, Robin D.; Seddon, Kenneth R. (Eds.); Ionic Liquids - Industrial Applications to Green Chemistry, ACS Symposium Series 818, 2002; ISBN 0841237891" und "Wasserscheid, Peter; Welton, Tom (Eds.); Ionic Liquids in Synthesis, Verlag Wiley-VCH 2003; ISBN 35273051557" verwiesen.

Aus "Yukihiro Yoshida; Gunzi Saito; Influence of structural variations in 1-alkyl-3-methylimidazolium cation and tetrahalogenoferrate(III) anion on the physical properties of the paramagnetic ionic liquids, Journal of Materials Chemisrty 2006, 1254-1262" ist die Herstellung von paramagnetischen, ionischen Flüssigkeiten, bestehend aus 1-alkyl-methylimidazolium RMI⁺ Kationen und Tetrahalogenoferrat(III) FeX₄ Anionen bekannt, wobei diese paramagnetischen, ionischen Flüssigkeiten bezüglich ihrer Dichte, Viskosität, ionischen Leitfähigkeit und magnetischen Suszeptibilität untersucht wurden.

### Kurzdarstellung der Erfindung:

Eine Aufgabe der Erfindung ist es, flüssige Extraktionsmedien zu finden, welche unabhängig von der Einwirkung der Gravitationskraft und/oder der Zentrifugalkraft und unabhängig vom Dichteunterschied der beiden Phasen getrennt werden können und welche möglicherweise zudem in ihren chemischen und physikalischen Eigenschaften in breitem Umfang an ein gegebenes Trennproblem anpassbar sind.

Diese Aufgabe wird durch die Verwendung einer paramagnetischen ionischen Flüssigkeit, und durch ein Verfahren zum Extrahieren gemäß den unabhängigen Patentansprüchen 1 und 11 gelöst. Weitere beispielhafte Ausgestaltungen der Erfindung sind in den abhängigen Ansprüchen beschrieben.

Im Folgenden werden Ausgestaltungen der Verwendung eines Extraktionsmediums beschrieben. Die Merkmale der Ausgestaltungen gelten jedoch ebenso für das Verfahren zum Extrahieren.

Gemäß *der Erfindung* ist die ionische Flüssigkeit eine paramagnetische ionische Flüssigkeit.

Unter einer paramagnetischen ionischen Flüssigkeit wird insbesondere eine ionische Flüssigkeit verstanden, welche zusätzlich die Eigenschaft aufweist, beim Anlegen eines äußeren, inhomogenen Magnetfeldes eine Kraft zu erfahren, welche diese in das Magnetfeld hineinzieht, sodass diese also eine magnetische Suszeptibilität > 1 hat.

Bei einer solchen Anwendung von ionischen Flüssigkeiten kann die Optimierung der Eigenschaften für die jeweilige extraktive Anwendung in weiten Grenzen durch eine Variation der Struktur von Anion und Kation bzw. eine Variation ihrer Kombination erfolgen, was den ionischen Flüssigkeiten übrigens ganz allgemein die Bezeichnung "Designer Solvents" (siehe beispielsweise Freemantle, M.; Chem. Eng. News, 78, 2000, 37) eingebracht hat.

Gemäß einer beispielhaften Ausführungsform ist die Extraktion eine flüssig/flüssig oder flüssig/fest oder flüssig/gasförmig Extraktion.

Gemäß einer beispielhaften Ausführungsform enthält die paramagnetische ionische Flüssigkeit Anionen, welche Übergangsmetallverbindungen sind.

Gemäß einer beispielhaften Ausführungsform enthält die paramagnetische ionische Flüssigkeit Kationen, welche Übergangsmetalfkationen und/oder Übergangsmetallverbindungen sind.

Der Vollständigkeit sei hierbei darauf hingewiesen, dass unter Übergangsmetallen It. der IUPAC-Regel 1.21 insbesondere die Elemente der Ordnungszahlen 21-30, 39-48, 57-80, 89-103, 104 bis zum hypothetischen 112 verstanden werden.

Gemäß einer beispielhaften Ausführungsform entspricht die paramagnetische ionische Flüssigkeit einer der allgemeinen Formeln [A]⁺[M^{+v}Xᵥ₊₁]⁻, ([A]⁺)₂[M^{+v}Xᵥ₊₂]²⁻, oder ([A]⁺)₃[M^{+v}Xᵥ₊₃]³⁻, wobei [A]⁺ für ein quaternäres Ammonium-Kation [R^{1'}R¹R²R³N]⁺, ein Phosphonium-Kation [R^{1'}R¹R²R³P]⁺, ein Sulfonium-Kation [R^{1'}R¹R²S]⁺ oder ein heteroaromatisches Kation steht, wobei M^{+v} ein Übergangsmetallatom mit der Oxidationszahl +v und wobei X ein Ion bzw. ein Ligand mit der Ladungszahl -1 ist, R^{1'}, R¹, R² und R³ mögen hierbei Reste sein, welche nachfolgend genauer beschrieben werden.

Gemäß einer beispielhaften Ausführungsform weist die paramagnetische ionische Flüssigkeit eine Lösung eines paramagnetischen anorganischen und/oder organischen Salzes in einer nicht paramagnetischen ionischen Flüssigkeit auf. D.h. die paramagnetische ionische Flüssigkeit kann dadurch erzeugt werden, indem ein paramagnetisches anorganisches oder paramagnetisches organisches Salz in einer an sich nicht paramagnetischen ionischen Flüssigkeit gelöst oder mit dieser gemischt wird.

Gemäß einer beispielhaften Ausführungsform entspricht die nicht paramagnetische ionische Flüssigkeit der allgemeinen Formel ([A]⁺)ₐ[B]^{a-}, wobei [A]⁺ für ein quaternäres Ammonium-Kation [R^{1'}R¹R²R³N]⁺, ein Phosphonium-Kation [R^{1'}R¹R²R³P]⁺, ein Sulfonium-Kation [R^{1'}R¹R²S]⁺ oder ein heteroaromatisches Kation steht. R^{1'}, R¹, R² und R³ mögen hierbei Reste sein, welche nachfolgend genauer beschrieben werden.

Gemäß einer beispielhaften Ausführungsform weist das paramagnetische Salz einen Schmelzpunkt von unter 200°C auf. Insbesondere kann das paramagnetische Salz einen Schmelzpunkt von unter 100°C und bevorzugt von unter 20°C aufweisen.

Gemäß einer beispielhaften Ausführungsform weist die paramagnetische ionische Flüssigkeit eine Lösung eines paramagnetischen anorganischen und/oder paramagnetischen organischen Salzes in einer ionischen Flüssigkeit auf und die paramagnetische ionische Flüssigkeit weist einen Schmelzpunkt von unter 200°C auf. Insbesondere mag die paramagnetische Flüssigkeit einen Schmelzpunkt von unter 100°C und bevorzugt von unter 20°C aufweisen. D.h. die paramagnetische ionische Flüssigkeit, welche dann als Extraktionsmedium verwendet wird, kann dadurch erzeugt werden, indem ein paramagnetisches anorganisches oder paramagnetisches organisches Salz in einer an sich nicht paramagnetischen ionischen Flüssigkeit oder in einer bereits selber paramagnetischen Flüssigkeit gelöst oder mit dieser gemischt wird.

Paramagnetische Salze mögen insbesondere Salze (und ihre Lösungen in molekularen Lösungsmitteln) sein, welche in ein inhomogenes äußeres Magnetfeld hineingezogen werden. Beispiele hierfür mögen z.B. FeCl₃ und viele Verbindungen der seltenen Erden und der Actinoide. Ihnen gemeinsam ist die Existenz von einsamen Elektronen, z.B. in so genannten "High Span" Komplexen.

Als Beispiele für magnetische Flüssigkeiten mögen so genannte Ferrofluide genannt werden, welche keine echten Flüssigkeiten sind, sondern Suspensionen von bis zu Nano fein vermahlenen Ferrit-Partikeln, d.h. Ferrit-Partikeln (feste Stoffe), welche bis auf wenige Mikrometer bis einige Nanometer vermahlen sind, in diversen Lösungsmitteln. Sie zeigen starke Reaktion auf äußere Magnetfelder.

Ein Beispiel für eine magnetische ionische Flüssigkeit ist 1-Butyl-3-methylimidazolium-tetrachloroferrat (III) publiziert (Hayashi, Satoshi; Hamaguchi, Hiro-o. Chemistry Letters (2004), 33(12), 1590-1591.). Diese Substanz weißt eine verhältnismäßig große magnetische Suszeptibilität von χ = 40 10⁻⁶ Am²/kg (emu/g; electromagnetic units) auf und ist paramagnetisch.

Gemäß einem beispielhaften Aspekt werden paramagnetische ionische Flüssigkeiten als Extraktionsmedien für die flüssig/flüssig oder flüssig/fest oder flüssig/gasförmig Extraktion eingesetzt und in einem magnetischen Feld abgetrennt.

Es wird darauf hingewiesen, dass Ausführungsformen der Erfindung mit Bezug auf unterschiedliche Erfindungsgegenstände beschrieben wurden und im Folgenden beschrieben werden. Insbesondere sind einige Ausführungsformen der Erfindung mit Vorrichtungsansprüchen und andere Ausführungsformen der Erfindung mit Verfahrensansprüchen bzw. Verwendungsansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Grundvoraussetzung einer paramagnetischen Wechselwirkung mit einem Magnetfeld, ist die Anwesenheit von Atomen, Molekülen oder Ionen mit "einsamen" Elektronen. Prinzipiell kommen dabei
a.) Radikale
b.) oder chemische Verbindungen der Übergangsmetalle (It. IUPAC-Regel 1.21 Elemente der Ordnungszahlen 21-30, 39-48, 57-80, 89-103, 104 bis zum hypothetischen 112) in Frage.

Exemplarische Ausführungsbeispiel von paramagnetischen ionischen Flüssigkeiten weisen folgende Strukturmerkmale auf:
a. Übergangsmetallverbindung als Anion,
b. oder Übergangsmetall bzw. Übergangsmetallverbindung als Kation,
c. oder Lösung eines paramagnetischen anorganischen oder organischen Salzes in einer ionischen Flüssigkeit mit den Strukturmerkmalen a. und/oder b. oder in einer nicht paramagnetischen ionischen Flüssigkeit, wobei es unerheblich ist, ob das paramagnetische Salz dabei mit der ionischen Flüssigkeit reagiert oder nicht,
d. oder beliebige Mischung von ionischen Flüssigkeiten mit den Strukturmerkmalen a.-c.,

- wobei die nicht paramagnetische ionische Flüssigkeit in c. der allgemeinen Formel I

   ([A]⁺)ₐ[B]^{a-} (I),

   entspricht, in der
   [A]⁺ für ein quaternäres Ammonium-Kation [R^{1'}R¹R²R³N]⁺, ein Phosphonium-Kation [R^{1'}R¹R²R³P]⁺, ein Sulfonium-Kation [R^{1'}R¹R²S]⁺ oder ein heteroaromatisches Kation steht,
   R¹, R^{1'}, R², R³ unabhängig voneinander für Wasserstoff, ggf. sub. Alkyl, Alkenyl, Alkinyl, Cycloalkyl, Cycloalkenyl, Aryl oder Heteroaryl stehen; oder
   zwei der Reste R¹, R^{1'}, R², R³ bilden gemeinsam mit dem Heteroatom, an welchem sie gebunden sind einen Ring aus, wobei dieser gesättigt oder ungesättigt, unsubstituiert oder substituiert ist und wobei diese Kette durch ein oder mehrere Heteroatome ausgewählt aus der Gruppe O, S, NH oder N-C₁-C₄-Alkyl unterbrochen sein kann, und
   [B]^{a-} ein beliebiges Anion mit der negativen Ladung a sein kann.
   Der Heteroaromat der Formel ist üblicherweise ein 5- oder 6-gliedriger Heteroaromat, der mindestens ein Stickstoffatom sowie gegebenenfalls ein Sauerstoff- oder Schwefelatom aufweist, und der unsubstituiert oder substituiert ist und/oder anneliert ist, vorzugsweise ist der Heteroaromat der Formel IIb ausgewählt aus der Gruppe: 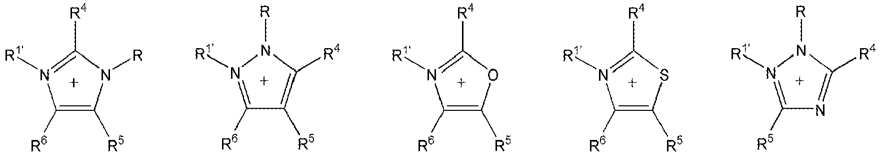 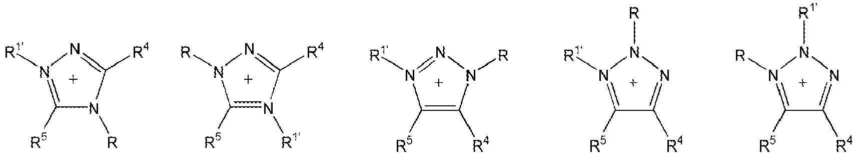 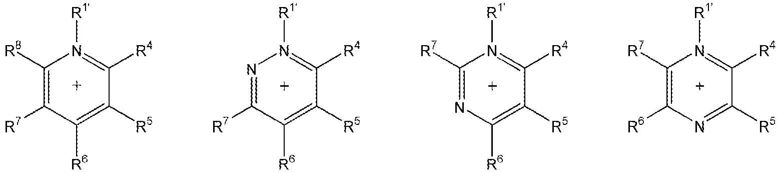 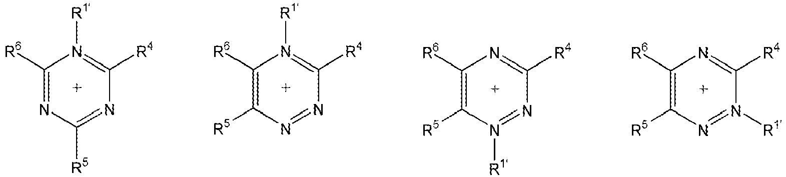 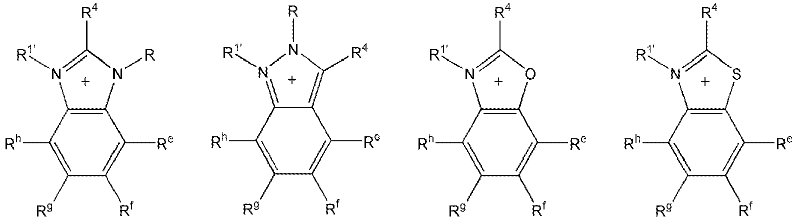 wobei die Reste folgende Bedeutung haben:
   R für Wasserstoff, C₁-C₃₀-Alkyl, C₃-C₁₂-Cycloalkyl, C₂-C₃₀-Alkenyl, C₃-C₁₂-Cycloalkenyl, C₂-C₃₀-Alkinyl, Aryl oder Heteroaryl, wobei die 7 letztgenannten Reste ein oder mehrere Halogenreste tragen können und/oder 1 bis 3 Reste ausgewählt aus der Gruppe C₁-C₆-Alkyl, Aryl, Heteroaryl, C₃-C₇-Cycloalkyl, Halogen, OR^{c}, SR^{c}, NR^{c}R^{d}, COR^{c}, COOR^{c}, CO-NR^{c}R^{d}, wobei R^{c} und R^{d} für Wasserstoff, C₁-C₆-Alkyl, C₁-C₆-Halogenalkyl, Cyclopentyl, Cyclohexyl, Phenyl, Tolyl oder Benzyl steht;
   R¹, R^{1'}, R², R³ unabhängig voneinander für Wasserstoff, ggf. sub. Alkyl, Alkenyl, Alkinyl, Cycloalkyl, Cycloalkenyl, Aryl oder Heteroaryl stehen; oder
   zwei der Reste R¹, R^{1'}, R², R³ bilden gemeinsam mit dem Heteroatom, an welchem sie gebunden sind einen Ring aus, wobei dieser gesättigt oder ungesättigt, unsubstituiert oder substituiert ist und wobei diese Kette durch ein oder mehrere Heteroatome ausgewählt aus der Gruppe O, S, NH oder N-C₁-C₄-Alkyl unterbrochen sein kann;
   R⁴, R⁵, R⁶, R⁷, R⁸ unabhängig voneinander Wasserstoff, Halogen, Nitro, Cyano, OR^{c}, SR^{c}, NR^{c}R^{d}, COR^{c}, COOR^{c}, CO-NR^{c}R^{d}, C₁-C₃₀-Alkyl, C₃-C₁₂-Cycloalkyl, C₂-C₃₀-Alkenyl, C₃-C₁₂-Cycloalkenyl, Aryl oder Heteroaryl, wobei die 6 letztgenannten Reste ein oder mehrere Halogenreste tragen können und/oder 1 bis 3 Reste ausgewählt aus der Gruppe C₁-C₆-Alkyl, Aryl, Heteroaryl, C₃-C₇-Cycloalkyl, Halogen, OR^{c}, SR^{c}, NR^{c}R^{d}, COR^{c}, COOR^{c}, CO-NR^{c}R^{d}, wobei R^{c} und R^{d} unabhängig voneinander für Wasserstoff, C₁-C₆-Alkyl, C₁-C₆-Halogenalkyl, Cyclopentyl, Cyclohexyl, Phenyl, Tolyl oder Benzyl stehen; oder
   zwei der Reste R, R⁴, R⁵, R⁶, R⁷, R⁸, welche benachbart sind, bilden gemeinsam mit dem Atom, an welchem sie gebunden sind einen Ring aus, wobei dieser ungesättigt oder aromatisch, unsubstituiert oder substituiert ist und wobei die durch die betreffenden Reste gebildetete Kette durch ein oder mehrere Heteroatome ausgewählt aus der Gruppe O, S, N, NH oder N-C₁-C₄-Alkyl unterbrochen sein kann,
   R^{e}, R^{f}, R^{g}, R^{h} unabhängig voneinander für Wasserstoff,C₁-C₆-Alkyl, Aryl-, Heteroaryl-, C₃-C₇-Cycloalkyl, Halogen, OR^{c}, SR^{c}, NR^{c}R^{d}, COOR^{c}, CO-NR^{c}R^{d} oder COR^{c} substituiert ist, wobei R^{c}, R^{d} unabhängig voneinander für Wasserstoff, C₁-C₆-Alkyl, C₁-C₆-Halogenalkyl, Cyclopentyl, Cyclohexyl, Phenyl, Tolyl oder Benzyl stehen;
      vorzugsweise für Wasserstoff, Halogen oder C₁-C₆-Alkyl, insbesondere Wasserstoff oder C₁-C₆-Alkyl;
   [B]^{a-} ist vorzugsweise
   Fluorid, Chlorid, Bromid, Iodid; Hexafluorophosphat; Hexafluoroarsenat; Hexafluoroantimonat; Trifluoroarsenat; Nitrit; Nitrat; Sulfat; Hydrogensulfat; Carbonat; Hydrogencarbonat; Alkylcarbonat; Arylcarbonat; Phosphat; Hydrogenphosphat; Dihydrogenphosphat; tetrasubstituiertes Borat der allgemeinen Formel (Va) [BRⁱR^{j}R^{k}R^{l}]⁻, wobei Rⁱ bis R^{l} unabhängig voneinander für Fluor oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;
   organisches Sulfonat der allgemeinen Formel (Vb) [R^{m}-SO₃]⁻, wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   organisches Sulfat der allgemeinen Formel (Vc) [R^{m}-OSO₃]⁻, wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   Carboxylat der allgemeinen Formel (Vd) [Rⁿ-COO]⁻, wobei Rⁿ für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   (Fluoralkyl)fluorphosphat der allgemeinen Formel (Ve) [PFₓ(C_{y}F_{2y+1-z}H_{z})₆₋ₓ]⁻ , wobei 1 ≤x ≤6, 1 ≤y ≤8 und 0 ≤z ≤ 2y+1; oder
   Imid der allgemeinen Formeln (Vf) [R°-SO₂-N-SO₂-R^{p}]-, (Vg) [R^{r}-SO₂-N-CO-R^{s}]- oder (Vh) [R^{t}-CO-N-CO-R^{u}]-, wobei R° bis R^{u} unabhängig voneinander für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen; steht.
   Organisches Phosphat der allgemeinen Formel (Vi) [R^{m}-OPO₄]²- oder (Vj) [R^{m}-OPO₂-ORⁿ]⁻ wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, und wobei Rⁿ für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   Die Ladung "a-" des Anions [B]^{a-} beträgt "1-", "2-" oder "3-". Als Beispiele zweifach negativ geladener Anionen seien Sulfat, Hydrogenphosphat und Carbonat genannt. Als Beispiel eines dreifach negativ geladenen Anions sei Phosphat genannt.
   Als Kohlenstoff enthaltende organische, gesättigte oder ungesättigte, acyclische oder cyclische, aliphatische, aromatische oder araliphatische Reste mit 1 bis 30 Kohlenstoffatomen stehen die Reste Rⁱ bis R^{l} beim tetrasubstituiertes Borat (Va), der Rest R^{m} beim organischen Sulfonat (Vb) und Sulfat (Vc), der Rest Rⁿ beim Carboxylat (Vd) und die Reste R^{o} bis R^{u} bei den Imiden (Vf), (Vg) und (Vh) unabhängig voneinander bevorzugt für
   C₁- bis C₃₀-Alkyl und deren aryl-, heteroaryl-, cycloalkyl-, halogen-, hydroxy-, amino-, carboxy-, formyl-, -O-, -CO-, - CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder CₙF_{2(n-a)+(1-b)}H_{2a+b} mit n ≤30, 0 ≤ a ≤ n und b = 0 oder 1 (beispielsweise CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅);
   C₃- bis C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder C_{nF2(n-a)-(1-b)}H_{2a-b} mit n ≤30, 0 ≤ a ≤ n und b = 0 oder 1;
   C₂- bis C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder C_{nF2(n-a)-(1-b)}H_{2a-b} mit n ≤30, 0 ≤ a ≤ n und b = 0 oder 1;
   C₃- bis C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder C_{nF2(n-a)-3(1-b)}H_{2a-3b} mit n ≤ 30, 0 ≤ a ≤ n und b = 0 oder 1; und
   Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenylphenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C_{6F(5-a)}Hₐ mit 0 ≤a ≤5.
   Handelt es sich bei dem Anion [B]^{a-} um ein tetrasubstituiertes Borat (Va) [BRⁱR^{j}R^{k}R^{l}], so sind bei diesem bevorzugt alle vier Reste Rⁱ bis R¹ identisch, wobei diese bevorzugt für Fluor, Trifluormethyl, Pentafluorethyl, Phenyl, 3,5-Bis(trifluormethyl)phenyl stehen. Besonders bevorzugte tetrasubstituierte Borate (Va) sind Tetrafluoroborat, Tetraphenylborat und Tetra[3,5-bis(trifluormethyl)phenyl]borat.
   Handelt es sich bei dem Anion [B]^{a-} um ein organisches Sulfonat (Vb) [R^{m}-SO₃]⁻ oder Sulfat (Vc) [R^{m}-OSO₃]⁻ so steht der Rest R^{m} bevorzugt für Methyl, Trifluormethyl, Pentafluorethyl, p-Tolyl oder C₉F₁₉. Besonders bevorzugte organische Sulfonate (Vb) sind Trifluormethansulfonat (Triflat), Methansulfonat, Nonadecafluorononansulfonat (Nonaflat) und p-Toluolsulfonat; besonders bevorzugte organische Sulfate (Vc) sind Methylsulfat, Ethylsulfat, n-Propylsulfat, i-Propylsulfat, Butylsulfat, Pentylsulfat, Hexylsulfat, Heptylsulfat, Octylsulfat, Nonylsulfat und Decylsulfat sowie längerkettige n-Alkylsulfate; Benzylsulfat, Alkylarlysulfat.
   Handelt es sich bei dem Anion [B]^{a-} um ein Carboxylat (Vd) [Rⁿ-COO]⁻, so steht der Rest Rⁿ bevorzugt für Wasserstoff, Trifluormethyl, Pentafluorethyl, Phenyl, Hydroxy-phenyl-methyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Carboxylate (Vc) sind Formiat, Acetat, Propionat, Butyrat, Valeriat, Benzoat, Mandelat, Trichloracetat, Dichloracetat, Chloracetat, Trifluoracetat, Difluoracetat, Fluoracetat.
   Handelt es sich bei dem Anion [B]^{a-} um ein (Fluoralkyl)fluorphosphat (Ve) [PFₓ(CyF₂y_{+1-z}H_{z})₆₋ₓ]⁻, so ist z bevorzugt 0. Besonders bevorzugt sind (Fluoralkyl)fluorphosphate (Ve), bei denen z = 0, x = 3 und 1 ≤ y ≤ 4, konkret [PF₃(CF₃)₃]⁻, [PF₃(C₂F₅)₃]⁻, [PF₃(C₃F₇)₃]⁻ und [PF₃(C₄F₇)₃]⁻.
   Handelt es sich bei dem Anion [B]^{a-} um ein Imid (Vf) [R^{o}-SO₂-N-SO₂-R^{p}]⁻, (Vg) [R^{r}-SO₂-N-CO-R^{s}]⁻ oder (Vh) (R^{t}-CO-N-CO-R^{u}]⁻, so stehen die Reste R° bis R^{u} unabhängig voneinander bevorzugt für Wasserstoff, Trifluormethyl, Pentafluorethyl, Phenyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Imide (Vf), (Vg) und (Vh) sind [F₃C-SO₂-N-SO₂-CF₃]⁻, [F₃C-SO₂-N-CO-CF₃]⁻, [F₃C-CO-N-CO-CF₃]⁻ und jene, in denen die Reste R° bis R^{u} unabhängig voneinander für Wasserstoff, Methyl, Ethyl, Propyl, Butyl, Phenyl, Trichlormethyl, Dichlormethyl, Chlormethyl, Trifluormethyl, Difluormethyl oder Fluormethyl stehen.
- wobei das paramagnetische anorganische oder org. Salz bevorzugt ausgewählt ist aus
   CeS, CeCl₃, CeF₃, Ce₂S₃, CeO₂, CsO₂, CrCl₂, CrCl₃, CrF₃, Cr₂O₃, Cr₂(SO₄)₃, CrO₃, CoBr₂, CoCl₂, COCl₂▪₆H₂O, Co(CN)₂, CoF₂, COI₂, CoSO₄, CoS, Co₃O₄, CoF₃, Co₂O₃, CuBr₂, CuCl₂, CuCl₂▪2H₂O, CuF₂, CuF₂▪₂H₂O, Cu(OH)₂, Cu(NO₃)₂▪3H₂O, Cu(NO₃)₂▪6H₂O, CuO, CuSO₄, CuSO₄▪5H₂O, Dy₂O₃, Dy₂S₃, Er₂O₃, Er₂(SO₄)₃▪8H₂O, Er₂S₃, EuBr₂, EuCl₂, EuF₂, EuI₂, EuS, Eu₂O₃, Eu₂(SO₄)₃, GdCl₃, Gd₂O₃, Gd₂(SO₄)₃▪8H₂O, Gd₂S₃, Ho₂O₃, IrO₂, FeBr₂, FeCO₃, FeCl₂, FeCl₂▪4H₂O, FeF₂, FeI₂, FeO, FeSO₄, FeSO₄▪H₂O, FeSO₄▪₇H₂O, FeS, FeCl₃, FeCl₃▪6H₂O, FeF₃, FeF₃▪3H₂O, Fe(NO₃)₃▪9H₂O, MnBr₂, MnCO₃, MnCl₂, MnCl₂▪4H₂O, MnF₂, Mn(OH)₂, MnI₂, MnO, MnSO₄, MnSO₄▪H₂O, MnSO_{4▪4}H₂O, MnS(α), MnS(b), Mn₃O₄, MnF₃, Mn₂O₃, MnO₂, MoBr₃, MoCl₃, MoBr₄, MoCl₄, MoO₂, MoCl₅, NdF₃, Nd₂O₃, Nd₂(SO₄)₃, Nd₂S₃, NiBr₂, NiCl₂, NiCl₂▪6H₂O, NiF₂, Ni(OH)₂, NiI₂, Ni(NO₃)₂▪6H₂O, NiO, NiSO₄, NiS, Ni₃S₂, PtF₄, PuF₄, PuO₂, PuF₆, K₃Fe(CN)₆, KO₂, Pr₂O₃, Pr₂S₃, ReO₂, ReS₂, ReCl₅, ReO₃, Rh₂O₃, RbO₂, RuCl₃, RuO₂, SmBr₂, SmBr₃, Sm₂O₃, Sm₂(SO₄)₃▪8H₂O, Sm₂S₃, Na₂Cr₂O₇, TaCl₅, Tb₂O₃, Tm₂O₃, TiBr₂, TiCl₂, TiI₂, TiS, TiBr₃, TiCl₃, TiF₃, Ti₂O₃, WS₂, WBr₅, WCl₅, UBr₃, UCl₃, UH₃, UI₃, UBr₄, UCl₄, UF₄, UO₂, UF₆, UO₃, VBr₂, VCl₂, VBr₃, VCl₃, VF₃, V₂O₃, V₂S₃, VCl₄, VO₂, V₂O₅, Y₂O₃, Y₂S₃ oder einem anorganischen oder organischen Übergangsmetallsalz mit analogen Kationen und dem Anion [B]^{a-}, welches vorzugsweise ausgewählt ist aus
   Hexafluorophosphat; Hexafluoroarsenat; Hexafluoroantimonat; Trifluoroarsenat; Nitrit; Nitrat; Sulfat; Hydrogensulfat; Carbonat; Hydrogencarbonat; Alkylcarbonat; Arylcarbonat; Phosphat; Hydrogenphosphat; Dihydrogenphosphat; tetrasubstituiertes Borat der allgemeinen Formel (Va) [BRⁱR^{j}R^{k}R^{l}]⁻ wobei Rⁱ bis R^{l} unabhängig voneinander für Fluor oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;
   organischem Sulfonat der allgemeinen Formel (Vb) [R^{m}-SO₃]⁻, wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   organischem Sulfat der allgemeinen Formel (Vc) [R^{m}-OSO₃]⁻, wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   Carboxylat der allgemeinen Formel (Vd) [Rⁿ-COO]⁻, wobei Rⁿ für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   (Fluoralkyl)fluorphosphat der allgemeinen Formel (Ve) [PFₓ(C_{y}F_{2y+1-z}H_{z})₆₋ₓ]⁻, wobei 1 ≤x ≤6, 1 ≤y ≤8 und 0 ≤z ≤ 2y+1; oder
   Imid der allgemeinen Formeln (Vf) [R^{o}-SO₂-N-SO₂-R^{p}]⁻, (Vg) [R^{r}-SO₂-N-CO-R^{s}]- oder (Vh) [R^{t}-CO-N-CO-R^{u}]-, wobei R^{o} bis R^{u} unabhängig voneinander für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen; steht.
   Organischem Phosphat der allgemeinen Formel (Vi) [R^{m}-OPO₄]²⁻ oder (Vj) [R^{m}-OPO₂-ORⁿ]⁻ wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, und wobei Rⁿ für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   Die Ladung "a-" des Anions [B]^{a-} beträgt "1-", "2-" oder "3-". Als Beispiele zweifach negativ geladener Anionen seien Sulfat, Hydrogenphosphat und Carbonat genannt. Als Beispiel eines dreifach negativ geladenen Anions sei Phosphat genannt.
   Als Kohlenstoff enthaltende organische, gesättigte oder ungesättigte, acyclische oder cyclische, aliphatische, aromatische oder araliphatische Reste mit 1 bis 30 Kohlenstoffatomen stehen die Reste Rⁱ bis R^{l} beim tetrasubstituiertes Borat (Va), der Rest R^{m} beim organischen Sulfonat (Vb) und Sulfat (Vc), der Rest Rⁿ beim Carboxylat (Vd) und die Reste R^{o} bis R^{u} bei den Imiden (Vf), (Vg) und (Vh) unabhängig voneinander bevorzugt für
   C₁- bis C₃₀-Alkyl und deren aryl-, heteroaryl-, cycloalkyl-, halogen-, hydroxy-, amino-, carboxy-, formyl-, -O-, -CO-, - CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder CₙF_{2(n-a)+(i-b)}H_{2a+b} mit n ≤30, 0 ≤ a ≤ n und b = 0 oder 1 (beispielsweise CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅);
   C₃- bis C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder C_{nF2(n-a)-(1-b)}H_{2a-b} mit n ≤30, 0 ≤ a ≤ n und b = 0 oder 1;
   C₂- bis C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder C_{nF2(n-a)-(1-b)}H_{2a-b} mit n ≤30, 0 ≤ a ≤ n und b = 0 oder 1;
   C₃- bis C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder C_{nF2(n-a)-3(1-b)}H_{2a-3b} mit n ≤30, 0 ≤ a ≤ n und b = 0 oder 1; und
   Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenylphenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤a ≤5.
   Handelt es sich bei dem Anion [B]^{a-} um ein tetrasubstituiertes Borat (Va) [BRⁱR^{j}R^{k}R^{l}]⁻, so sind bei diesem bevorzugt alle vier Reste Rⁱ bis R^{l} identisch, wobei diese bevorzugt für Fluor, Trifluormethyl, Pentafluorethyl, Phenyl, 3,5-Bis(trifluormethyl)phenyl stehen. Besonders bevorzugte tetrasubstituierte Borate (Va) sind Tetrafluoroborat, Tetraphenylborat und Tetra[3,5-bis(trifluormethyl)phenyl]borat.
   Handelt es sich bei dem Anion [B]^{a-} um ein organisches Sulfonat (Vb) [R^{m}-SO₃]- oder Sulfat (Vc) [R^{m}-OSO₃]⁻ so steht der Rest R^{m} bevorzugt für Methyl, Trifluormethyl, Pentafluorethyl, p-Tolyl oder C₉F₁₉. Besonders bevorzugte organische Sulfonate (Vb) sind Trifluormethansulfonat (Triflat), Methansulfonat, Nonadecafluorononansulfonat (Nonaflat) und p-Toluolsulfonat; besonders bevorzugte organische Sulfate (Vc) sind Methylsulfat, Ethylsulfat, n-Propylsulfat, i-Propylsulfat, Butylsulfat, Pentylsulfat, Hexylsulfat, Heptylsulfat, Octylsulfat, Nonylsulfat und Decylsulfat sowie längerkettige n-Alkylsulfate; Benzylsulfat, Alkylarlysulfat. Handelt es sich bei dem Anion [B]^{a-} um ein Carboxylat (Vd) [Rⁿ-COO]⁻, so steht der Rest Rⁿ bevorzugt für Wasserstoff, Trifluormethyl, Pentafluorethyl, Phenyl, Hydroxy-phenyl-methyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Carboxylate (Vc) sind Formiat, Acetat, Propionat, Butyrat, Valeriat, Benzoat, Mandelat, Trichloracetat, Dichloracetat, Chloracetat, Trifluoracetat, Difluoracetat, Fluoracetat.
   Handelt es sich bei dem Anion [B]^{a-} um ein (Fluoralkyl)fluorphosphat (Ve) [PFₓ(C_{y}F_{2y+1-z}H_{z})₆₋ₓ]⁻, so ist z bevorzugt 0. Besonders bevorzugt sind (Fluoralkyl)fluorphosphate (Ve), bei denen z = 0, x = 3 und 1 ≤ y ≤ 4, konkret [PF₃(CF₃)₃]⁻, [PF₃(C₂F₅)₃]⁻, [PF₃(C₃F₇)₃]⁻ und [PF₃(C₄F₇)₃]⁻.
   Handelt es sich bei dem Anion [B]^{a-} um ein Imid (Vf) [R^{o}-SO₂-N-SO₂-R^{p}]⁻, (Vg) [R^{r}-SO₂-N-CO-R^{s}]⁻ oder (Vh) (R^{t}-CO-N-CO-R^{u}]⁻, so stehen die Reste R^{o} bis R^{u} unabhängig voneinander bevorzugt für Wasserstoff, Trifluormethyl, Pentafluorethyl, Phenyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Imide (Vf), (Vg) und (Vh) sind [F₃C-SO₂-N-SO₂-CF₃]⁻, [F₃C-SO₂-N-CO-CF₃]⁻, [F₃C-CO-N-CO-CF₃]⁻ und jene, in denen die Reste R^{o} bis R^{u} unabhängig voneinander für Wasserstoff, Methyl, Ethyl, Propyl, Butyl, Phenyl, Trichlormethyl, Dichlormethyl, Chlormethyl, Trifluormethyl, Difluormethyl oder Fluormethyl stehen,
   oder einem anorganischen oder organischen komplexen Übergangsmetallsalz mit zu den Kationen analogen Zentralatomen und Anionen [B]^{a-} oder F⁻, Cl⁻, Br⁻, I⁻, CN⁻, SCN⁻ Cyclopentadienyl-, Aromaten, Chelatbildner oder anderen Anionen oder Molekülen als Liganden enthält, oder einem Gemisch aller bis jetzt beschriebenen Übergangsmetallsalze, wobei es unerheblich ist, ob das Übergangsmetallsalz wie z.B. in 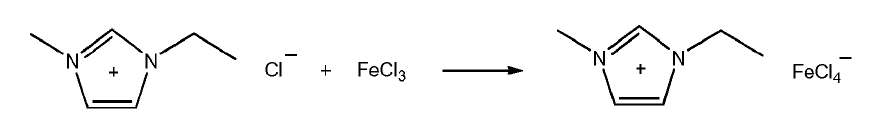 zu einem Komplex reagiert oder wie z.B. in 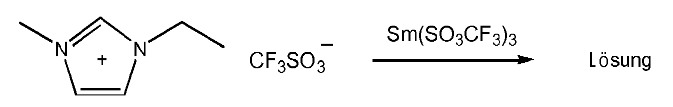 nur physikalisch in Lösung geht,
- wobei die paramagnetische ionische Flüssigkeit in a. den allgemeinen Formeln

   [A]⁺[M^{+v}Xᵥ₊₁]⁻ oder ([A]⁺)₂[M^{+v}Xᵥ₊₂]²⁻ oder ([A]⁺)₃[M^{+v}Xᵥ₊₃]³⁻

   entspricht, in der
   [A]⁺ für ein quaternäres Ammonium-Kation [R^{1'}R¹R²R³N]⁺, ein Phosphonium-Kation [R^{1'}R¹R²R³P]⁺, ein Sulfonium-Kation [R^{1'}R¹R²S]⁺ oder ein heteroaromatisches Kation steht,
   R¹, R^{1'}, R², R³ unabhängig voneinander für Wasserstoff, ggf. sub. Alkyl, Alkenyl, Alkinyl, Cycloalkyl, Cycloalkenyl, Aryl oder Heteroaryl stehen; oder
   zwei der Reste R¹, R^{1'}, R², R³ bilden gemeinsam mit dem Heteroatom, an welchem sie gebunden sind einen Ring aus, wobei dieser gesättigt oder ungesättigt, unsubstituiert oder substituiert ist und wobei diese Kette durch ein oder mehrere Heteroatome ausgewählt aus der Gruppe O, S, NH oder N-C₁-C₄-Alkyl unterbrochen sein kann, und
   M^{+v} ein Übergangsmetallatom mit der Oxidationszahl +v und
   X ein Ion bzw. ein Ligand mit der Ladungszahlzahl -1 ist.
   Der Heteroaromat der Formel ist üblicherweise ein 5- oder 6-gliedriger Heteroaromat, der mindestens ein Stickstoffatom sowie gegebenenfalls ein Sauerstoff- oder Schwefelatom aufweist, und der unsubstituiert oder substituiert ist und/oder anneliert ist, vorzugsweise ist der Heteroaromat ausgewählt aus der Gruppe: 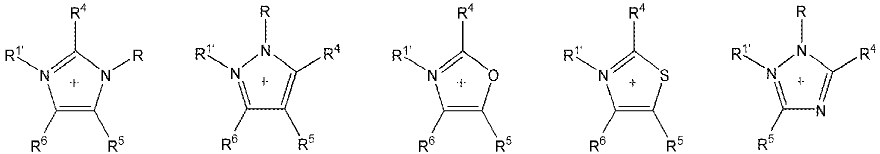 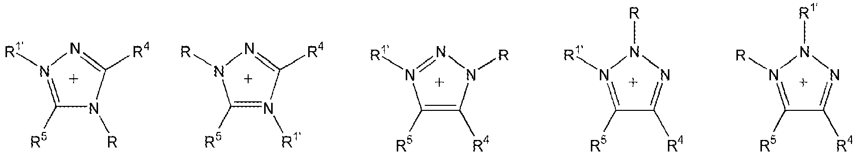 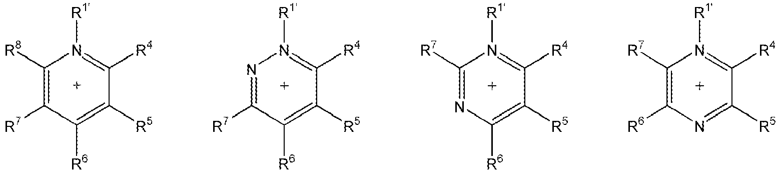 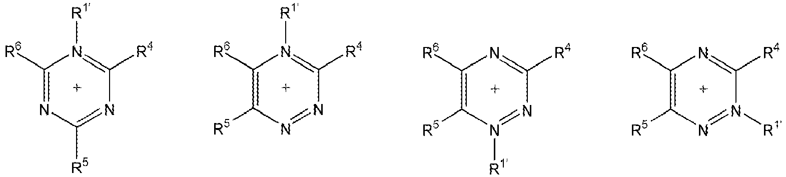 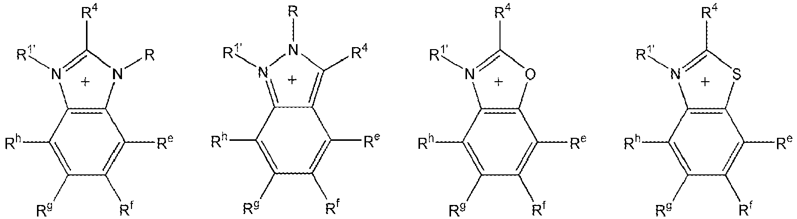 wobei die Reste folgende Bedeutung haben:
   R für Wasserstoff, C₁-C₃₀-Alkyl, C₃-C₁₂-Cycloalkyl, C₂-C₃₀-Alkenyl, C₃-C₁₂-Cycloalkenyl, C₂-C₃₀-Alkinyl, Aryl oder Heteroaryl, wobei die 7 letztgenannten Reste ein oder mehrere Halogenreste tragen können und/oder 1 bis 3 Reste ausgewählt aus der Gruppe C₁-C₆-Alkyl, Aryl, Heteroaryl, C₃-C₇-Cycloalkyl, Halogen, OR^{c}, SR^{c}, NR^{c}R^{d}, COR^{c}, COOR^{c}, CO-NR^{c}R^{d}, wobei R^{c} und R^{d} für Wasserstoff, C₁-C₆-Alkyl, C₁-C₆-Halogenalkyl, Cyclopentyl, Cyclohexyl, Phenyl, Tolyl oder Benzyl steht;
   R¹, R^{1'}, R², R³ unabhängig voneinander für Wasserstoff, ggf. sub. Alkyl, Alkenyl, Alkinyl, Cycloalkyl, Cycloalkenyl, Aryl oder Heteroaryl stehen; oder
   zwei der Reste R¹, R^{1'}, R², R³ bilden gemeinsam mit dem Heteroatom, an welchem sie gebunden sind einen Ring aus, wobei dieser gesättigt oder ungesättigt, unsubstituiert oder substituiert ist und wobei diese Kette durch ein oder mehrere Heteroatome ausgewählt aus der Gruppe O, S, NH oder N-C₁-C₄-Alkyl unterbrochen sein kann;
   R⁴, R⁵, R⁶, R⁷, R⁸ unabhängig voneinander Wasserstoff, Halogen, Nitro, Cyano, OR^{c}, SR^{c}, NR^{c}R^{d}, COR^{c}, COOR^{c}, CO-NR^{c}R^{d}, C₁-C₃₀-Alkyl, C₃-C₁₂-Cycloalkyl, C₂-C₃₀-Alkenyl, C₃-C₁₂-Cycloalkenyl, Aryl oder Heteroaryl, wobei die 6 letztgenannten Reste ein oder mehrere Halogenreste tragen können und/oder 1 bis 3 Reste ausgewählt aus der Gruppe C₁-C₆-Alkyl, Aryl, Heteroaryl, C₃-C₇-Cycloalkyl, Halogen, OR^{c}, SR^{c}, NR^{c}R^{d}, COR^{c}, COOR^{c}, CO-NR^{c}R^{d}, wobei R^{c} und R^{d} unabhängig voneinander für Wasserstoff, C₁-C₆-Alkyl, C₁-C₆-Halogenalkyl, Cyclopentyl, Cyclohexyl, Phenyl, Tolyl oder Benzyl stehen; oder
   zwei der Reste R, R⁴, R⁵, R⁶, R⁷, R⁸, welche benachbart sind, bilden gemeinsam mit dem Atom, an welchem sie gebunden sind einen Ring aus, wobei dieser ungesättigt oder aromatisch, unsubstituiert oder substituiert ist und wobei die durch die betreffenden Reste gebildete Kette durch ein oder mehrere Heteroatome ausgewählt aus der Gruppe O, S, N, NH oder N-C₁-C₄-Alkyl unterbrochen sein kann,
   R^{e}, R^{f}, R^{g}, R^{h} unabhängig voneinander für Wasserstoff,C₁-C₆-Alkyl, Aryl-, Heteroaryl-, C₃-C₇-Cycloalkyl, Halogen, OR^{c}, SR^{c}, NR^{c}R^{d}, COOR^{c}, CO-NR^{c}R^{d} oder COR^{c} substituiert ist, wobei R^{c}, R^{d} unabhängig voneinander für Wasserstoff, C₁-C₆-Alkyl, C₁-C₆-Halogenalkyl, Cyclopentyl, Cyclohexyl, Phenyl, Tolyl oder Benzyl stehen;
      vorzugsweise für
      Wasserstoff, Halogen oder C₁-C₆-Alkyl, insbesondere Wasserstoff oder C₁-C₆-Alkyl;
   M^{+v} ist ausgewählt aus den Elementen der Übergangsmetalle, bevorzugt ausgewählt aus den Elementen Ce, Cs, Cr, Co, Cu, Dy, Er, Eu, Gd, Ho, Ir, Fe, Mn, Mo, Nd, Ni, Pt, Pu, Pr, Re, Rh, Rb, Ru, Sm, Ta, Tb, Tm, Ti, W, U, V, und Y, besonders bevorzugt in den Oxidationsstufen Ce⁺², Ce⁺³, Ce⁺⁴, Cs⁺¹, Cr⁺², Cr⁺³, Cr⁺⁶, Co⁺², Co⁺³, Cu⁺¹, Cu⁺², Dy⁺³, Er⁺², Eu⁺³, Eu⁺³, Gd⁺², Gd⁺³, Ho⁺², Ho⁺³, Ir⁺⁴, Fe⁺², Fe⁺³, Mn⁺², Mn⁺³, Mo⁺², Mo⁺³, Mo⁺⁴, Mo⁺⁵, Nd⁺², Nd⁺³, Ni⁺², Ni⁺³, Pt⁺⁴, Pu⁺⁴, Pu⁺⁶, Pr⁺², Pr⁺³, Re⁺⁴, Re⁺⁵, Re⁺⁶, Rh⁺², Rh⁺³, Rb⁺⁴, Ru⁺³, Ru⁺⁴, Sm⁺², Sm⁺³, Ta⁺⁵, Tb⁺³, Tm⁺³, Ti⁺², Ti⁺³, W⁺⁴, W⁺⁵, U⁺³, U⁺⁴, U⁺⁶, V⁺², V⁺³, V⁺⁴, V⁺⁵, Y⁺² und Y⁺³.
   Jedes einzelne der v+1, v+2 oder v+3 Ionen oder Liganden X ist voneinander unabhängig
   bevorzugt ausgewählt aus
   Fluorid, Chlorid, Bromid, Iodid, Thiocyanat, Hexafluorophosphat; Hexafluoroarsenat; Hexafluoroantimonat; Trifluoroarsenat; Nitrit; Nitrat; Sulfat; Hydrogensulfat; Carbonat; Hydrogencarbonat; Alkylcarbonat; Arylcarbonat; Phosphat; Hydrogenphosphat; Dihydrogenphosphat; tetrasubstituiertes Borat der allgemeinen Formel (Va) [BRⁱR^{j}R^{k}R^{l}]⁻, wobei Rⁱ bis R^{l} unabhängig voneinander für Fluor oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;
   organischem Sulfonat der allgemeinen Formel (Vb) [R^{m}-SO₃]⁻, wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   organischem Sulfat der allgemeinen Formel (Vc) [R^{m}-OSO₃]⁻, wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   Carboxylat der allgemeinen Formel (Vd) [Rⁿ-COO]⁻, wobei Rⁿ für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   (Fluoralkyl)fluorphosphat der allgemeinen Formel (Ve) [PFₓ(C_{y}F_{2y+1-z}H_{z})₆₋ₓ]⁻, wobei 1 ≤x ≤6, 1 ≤y ≤8 und 0 ≤z ≤ 2y+1; oder
   Imid der allgemeinen Formeln (Vf) [R^{o}-SO₂-N-SO₂-R^{p}]⁻, (Vg) [R^{r}-SO₂-N-CO-R^{s}]- oder (Vh) [R^{t}-CO-N-CO-R^{u}]-, wobei R^{o} bis R^{u} unabhängig voneinander für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;
   Organischem Phosphat der allgemeinen Formel (Vi) [R^{m}-OPO₄]²⁻ oder (Vj) [R^{m}-OPO₂-ORⁿ]⁻ wobei R^{m} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, und wobei Rⁿ für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
   Als Kohlenstoff enthaltende organische, gesättigte oder ungesättigte, acyclische oder cyclische, aliphatische, aromatische oder araliphatische Reste mit 1 bis 30 Kohlenstoffatomen stehen die Reste Rⁱ bis R^{l} beim tetrasubstituiertes Borat (Va), der Rest R^{m} beim organischen Sulfonat (Vb) und Sulfat (Vc), der Rest Rⁿ beim Carboxylat (Vd) und die Reste R^{o} bis R^{u} bei den Imiden (Vf), (Vg) und (Vh) unabhängig voneinander bevorzugt für
   C₁- bis C₃₀-Alkyl und deren aryl-, heteroaryl-, cycloalkyl-, halogen-, hydroxy-, amino-, carboxy-, formyl-, -O-, -CO-, - CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder CₙF_{2(n-a)+(1-b)}H_{2a+b} mit n ≤30, 0 ≤ a ≤ n und b = 0 oder 1 (beispielsweise CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅);
   C₃- bis C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder C_{nF2(n-a)-(1-b)}H_{2a-b} mit n ≤30, 0 ≤ a ≤ n und b = 0 oder 1;
   C₂- bis C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder CₙF_{2(n-a)-(1-b})H_{2a-b} mit n ≤30, 0 ≤ a ≤ n und b = 0 oder 1;
   C₃- bis C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder CₙF_{2(n-a)-3(1-b)}H_{2a-3b} mit n ≤30, 0 ≤ a ≤ n und b = 0 oder 1; und
   Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenylphenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤a ≤5.
   Handelt es sich bei X um ein tetrasubstituiertes Borat (Va) [BRⁱR^{j}R^{k}R^{l}]⁻, so sind bei diesem bevorzugt alle vier Reste Rⁱ bis R^{l} identisch, wobei diese bevorzugt für Fluor, Trifluormethyl, Pentafluorethyl, Phenyl, 3,5-Bis(trifluormethyl)phenyl stehen. Besonders bevorzugte tetrasubstituierte Borate (Va) sind Tetrafluoroborat, Tetraphenylborat und Tetra[3,5-bis(trifluormethyl)phenyl]borat.
   Handelt es sich bei X um ein organisches Sulfonat (Vb) [R^{m}-SO₃]⁻ oder Sulfat (Vc) [R^{m}-OSO₃]⁻ so steht der Rest R^{m} bevorzugt für Methyl, Trifluormethyl, Pentafluorethyl, p-Tolyl oder C₉F₁₉. Besonders bevorzugte organische Sulfonate (Vb) sind Trifluormethansulfonat (Triflat), Methansulfonat, Nonadecafluorononansulfonat (Nonaflat) und p-Toluolsulfonat; besonders bevorzugte organische Sulfate (Vc) sind Methylsulfat, Ethylsulfat, n-Propylsulfat, i-Propylsulfat, Butylsulfat, Pentylsulfat, Hexylsulfat, Heptylsulfat, Octylsulfat, Nonylsulfat und Decylsulfat sowie längerkettige n-Alkylsulfate; Benzylsulfat, Alkylarlysulfat.
   Handelt es sich bei X um ein Carboxylat (Vd) [Rⁿ-COO]⁻, so steht der Rest Rⁿ bevorzugt für Wasserstoff, Trifluormethyl, Pentafluorethyl, Phenyl, Hydroxy-phenyl-methyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Carboxylate (Vc) sind Formiat, Acetat, Propionat, Butyrat, Valeriat, Benzoat, Mandelat, Trichloracetat, Dichloracetat, Chloracetat, Trifluoracetat, Difluoracetat, Fluoracetat.
   Handelt es sich bei X um ein (Fluoralkyl)fluorphosphat (Ve) [PFₓ(C_{y}F_{2y+1-z}H_{z})₆₋ₓ]⁻, so ist z bevorzugt 0. Besonders bevorzugt sind (Fluoralkyl)fluorphosphate (Ve), bei denen z = 0, x = 3 und 1 ≤ y ≤ 4, konkret [PF₃(CF₃)₃]⁻, [PF₃(C₂F₅)₃]⁻, [PF₃(C₃F₇)₃]⁻ und [PF₃(C₄F₇)₃]⁻.
   Handelt es sich bei X um ein Imid (Vf) [R^{o}-SO₂-N-SO₂-R^{p}]⁻, (Vg) [R^{r}-SO₂-N-CO-R^{s}]⁻ oder (Vh) (R^{t}-CO-N-CO-R^{u}]-, so stehen die Reste R^{o} bis R^{u} unabhängig voneinander bevorzugt für Wasserstoff, Trifluormethyl, Pentafluorethyl, Phenyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Imide (Vf), (Vg) und (Vh) sind [F₃C-SO₂-N-SO₂-CF₃]⁻, [F₃C-SO₂-N-CO-CF₃]⁻, [F₃C-CO-N-CO-CF₃]⁻ und jene, in denen die Reste R^{o} bis R^{u} unabhängig voneinander für Wasserstoff, Methyl, Ethyl, Propyl, Butyl, Phenyl, Trichlormethyl, Dichlormethyl, Chlormethyl, Trifluormethyl, Difluormethyl oder Fluormethyl stehen.
   Jedes X kann auch voneinander unabhängig ausgewählt sein aus der folgenden Gruppe an Komplexliganden:
   Acetylaceton; Acyl; Adenin; 2,2'-Azobisisobutyronitril; Alanin; Allyl; Allyloxycarbonyl; Wasser; Aryl; Arginin; Asparagin; Aspartat; BIABN; Biotinyl; 2,2'-bis(diphenyl-phosphino)-6,6'-dimethoxy-1,1'-diphenyl; 2,2'-Binaphtyldiphenyldiphosphin; 1,2-Bis[4,5-dihydro-3H-binaphtho[1,2-c:2',1'-e]phosphepino]benzen; 1,1 '-Bis{4,5-dihydro-3H-dinaphtho[1,2-c: 2',1'-e]phosphepino}ferrocen; 4,4'-Di-tert-butyl-4,4',5,5'-tetrahydro-3,3'-bis-3H-di-naphtho[2,1-c:1',2'-e]phosphepin; BINAL; 4,5-Dihydro-3H-dinaphtho[2,1-c;1',2'-e]phosphepin; 2,2'-Binaphtyldiol; Bis-tert-butyl-bipyridin; Benzylmethylphenylphosphin; Benzyl; tert-Butoxycarbonyl; Bis(2-((S)-4-iso-propyl-4,5-dihydrooxazol-2-yl)phenyl)amin; Bis(2-((S)-4-tert-butyl-4,5-dihydrooxazol-2-yl)phenyl)amin; 1,2-Bis(2,5-diethyl-phospholano)-ethan; Butoxy-carbonyl-4-diphenylphosphino-2-diphenylphosphino-methyl-pyrrolidin; 2,2'-Bipyridin; Benzoyl; Benzyloxycarbonyl; CO; Cycloheptatrienyl; Citrullin; Citrat; Cyanid; Cyclooctadien; Cyclooctatetraen; Cyclopentadienyl; Pentamethylcyclopentadienyl; Cyclohexyl; Cytidin; Cystein; Cytosin; Dibenzilidenaceton; O-Isopropyliden-2,3-dihydroxy-1,4-bis(diphenylphosphino)butan; (1R,2R)-Bis[(2-methoxyphenyl)phenyl-phosphino]ethan; 4-Dimethylaminopyridin; Dimethylglyoxim Dipivaloylmethanat; Dess-Martin-Periodinan; 1,4,7,10-Tetraaza-cyclododecan-1,4,7,10-tetraacetat; Diphenylphosphenylethan; Diphenylphosphenylmethan; Diphenylphosphenylpropan; desoxy-Ribose; Diethylentriamin-Pentaacetat; Bis(2,5-dimethylphospholano)-benzene; Ethylendiamintetraacetat; Ethylendiamin; Fluorenylmethoxycarbonyl; 7,7-dimethyl-1,1,1,2,2,3,3-heptafluorooctan-4,6-dionato; Galactose; Galactosamin; N-Acetylgalactosamin, Glycolyl; Glucose; Glucosamin, N-Acetyl-Glucosamin, Glutamin, Glutamat, Glycin, Guanin; Guanosin; Hämoglobin; Hexafluoroacetylacetonat; Histidin; Hexamethylphosphorsäuretriamid; Hydroxyprolin; Isoleucin; Leucin; Lysin; 2,2'-Bis[(N,N-dimethylamino)(phenyl)methyl]-1,1'-bisdicyclohexyl-phosphino)ferrocen; Myoglobin; Methionin; Methämoglobin; Metmyoglobin; 3,5-Dioxa-4-phosphacyclohepta[2,1-a;3,4-a']dinapthalen-4-yl)dimethylamin; Methylphenyln-propyl phosphin; Methylsulfon; Bicyclo[2.2.1]hepta-2,5-; Neuraminsäure; N-AcetylNeuraminsäure; N-Glycolyl-Neuraminsäure; 2,3-Bis(diphenylphosphino)-bicyclo[2.2.1]hept-5-en; Nitrilo-triessigsäure; Ornithin; Succinat; Oxalat; Phenyl o-anisylmethylphosphin; Phthalocyanin; Phenylalanin; Phenanthrolin; Picolylamin; Piperidin; para-Nitro-Benzoesäure; Porphyrin; Prolin; Pyridyl; PYBOX; Pyroglutamat ; Pyrazin; Ribose; Sarcosin; Salen; Serin; Succinyl; 1,4,7-Triazacyclononan; tert-butyl-di-methyl-silyl; Tartrat; Terpyridin; Thymidin; Threonin; Thymin; Tetramethylethylendiamin; Trimesinsäure ; Tris(pyrazolyl)borat; Triphenylphosphan; Tryptophan; Tyrosin; Tetrazol; Ubiquitin; Uracil; Uridin; Valin.
- wobei die in b. beschriebene paramagnetische ionische Flüssigkeit mit Übergangsmetall-Kation im wesentlichen den in c. beschriebenen paramagnetischen Salzen entspricht, so fern diese einen Schmelzpunkt von unter 200°C, bevorzugt von unter 100°C, besonders bevorzugt von unter 20°C aufweisen, da ansonsten der hohe Schmelzpunkt nur durch Lösen wie in c. beschrieben ausgeglichen werden kann.

Diese Strukturmerkmale sind eine notwendige Grundvoraussetzung eines paramagnetischen Verhaltens, also einer anziehenden Wechselwirkung mit einem äußeren Magnetfeld, die aber nicht hinreichend ist: Übergangsmetallverbindungen können, müssen aber nicht paramagnetisch sein, da die mit einsamen Elektronen besetzen Orbitale der Übergangsmetallatome z.B. mit Komplex-Liganden-Elektronen voll besetzt werden können, sodass der Paramagnetismus verschwindet ("Low-Spin Komplexe").

Zusätzlich können diese paramagnetischen ionischen Flüssigkeiten mit weiteren funktionellen Gruppen ausgestattet und/oder mit Additiven versetzt sein, um die physikalisch-chemischen Eigenschaften an das jeweilige Extraktionsproblem anzupassen.

Das magnetische Feld kann über einen Permanentmagneten oder einen Elektromagneten eingebracht werden, wobei auch supraleitende Elektromagneten eingesetzt werden können. Über die Geometrie des eingebrachten Feldes kann die Phasentrennung räumlich genau definiert werden, über die Stärke des Feldes die Geschwindigkeit reguliert werden.

Im Falle einer flüssig/flüssig Extraktion kann sogar noch dann extrahiert werden, wenn der Dichteunterschied der beiden Phasen gleich Null ist. Dies ermöglicht auch Aerospace-Anwendungen im schwerelosen Raum.

Im Falle einer fest/flüssig Extraktion kann ebenfalls auch bei gleicher Dichte ohne Anwendung einer Filtration eine Trennung erzielt werden. Im Falle einer flüssig/gasförmig Extraktion kann die Phasenseparierung beschleunigt werden und können auch Aerosole effektiv abgetrennt werden.

## Patentansprüche

1. Verwendung einer paramagnetischen ionischen Flüssigkeit, welche paramagnetische Ionen enthält, als Extraktionsmedium für eine Extraktion, wobei ein Abtrennen eines Extraktes auf einer Wechselwirkung zwischen dem Extraktionsmedium und einem magnetischen Feld beruht.

2. Verwendung gemäß Anspruch 1,
**dadurch gekennzeichnet, dass** die Extraktion eine flüssig/flüssig oder flüssig/fest oder flüssig/gasförmig Extraktion ist.

3. Verwendung gemäß Anspruch 1 oder 2,
**dadurch gekennzeichnet, dass** die paramagnetische ionische Flüssigkeit Anionen enthält, welche Übergangsmetallverbindungen sind.

4. Verwendung gemäß einem der Ansprüche 1 bis 3,
**dadurch gekennzeichnet, dass** die paramagnetische ionische Flüssigkeit Kationen enthält, welche Übergangsmetallkationen und/oder Übergangsmetallverbindungen sind.

5. Verwendung gemäß Anspruch 4,
**dadurch gekennzeichnet, dass** die paramagnetische ionische Flüssigkeit einer der allgemeinen Formeln
[A]⁺[M^{+v}Xᵥ₊₁]⁻,
([A]⁺)₂[M^{+v}Xᵥ₊₂]²⁻, oder
([A]⁺)₃[M^{+v}Xᵥ₊₃]³⁻
entspricht,
wobei [A]⁺ für ein quaternäres Ammonium-Kation [R^{1'}R¹R²R³N]⁺, ein Phosphonium-Kation [R^{1'}R¹R²R³P]⁺, ein Sulfonium-Kation [R^{1'}R¹R²S]⁺ oder ein heteroaromatisches Kation steht,
wobei M^{+v} ein Übergangsmetallatom mit der Oxidationszahl +v und wobei X ein Ion bzw. ein Ligand mit der Ladungszahl -1 ist.

6. Verwendung gemäß einem der Ansprüche 1 bis 5,
**dadurch gekennzeichnet, dass** die paramagnetische ionische Flüssigkeit eine Lösung eines paramagnetischen anorganischen und/oder organischen Salzes in einer nicht paramagnetischen ionischen Flüssigkeit aufweist.

7. Verwendung gemäß Anspruch 6,
**dadurch gekennzeichnet, dass** die nicht paramagnetische ionische Flüssigkeit der allgemeinen Formel ([A]⁺)ₐ[B]^{a-} entspricht,
wobei [A]⁺ für ein quaternäres Ammonium-Kation [R^{1'}R¹R²R³N]⁺, ein Phosphonium-Kation [R^{1'}R¹R²R³P]⁺, ein Sulfonium-Kation [R^{1'}R¹R²S]⁺ oder ein heteroaromatisches Kation steht.

8. Verwendung gemäß Anspruch 6 oder 7,
**dadurch gekennzeichnet, dass** das paramagnetische Salz einen Schmelzpunkt von unter 200°C aufweist.

9. Verwendung gemäß einem der Ansprüche 1 bis 5,
**dadurch gekennzeichnet, dass** die paramagnetische ionische Flüssigkeit eine Lösung eines paramagnetischen anorganischen und/oder paramagnetischen organischen Salzes in einer ionischen Flüssigkeit aufweist, und
wobei die paramagnetische ionische Flüssigkeit einen Schmelzpunkt von unter 200°C aufweist.

10. Verwendung gemäß einem der Ansprüche 1 bis 9,
**dadurch gekennzeichnet, dass** die paramagnetische ionische Flüssigkeit mit weiteren funktionellen Gruppen und/oder mit Additiven versetzt ist.

11. Verfahren zum Extrahieren einer Komponente aus einem Extraktionsgut,
**gekennzeichnet durch**:
Erzeugen eines Extrakts der Komponente mittels Inkontaktbringens des Extraktionsgutes mit einem Extraktionsmedium, welches eine paramagnetische ionische Flüssigkeit aufweist, welche paramagnetische Ionen enthält, und
Abtrennen des Extrakts mittels eines magnetischen Feldes.

## Claims

1. Use of a paramagnetic ionic liquid containing paramagnetic ions as an extraction medium for extraction, in which separation of an extract is based on an interaction between the extraction medium and a magnetic field.

2. Use according to claim 1,
**characterised in that** the extraction is a liquid/liquid or liquid/solid or liquid/gas extraction.

3. Use according to claim 1 or 2,
**characterised in that** the paramagnetic ionic contains liquid anions, which are transition metal compounds.

4. Use according to any one of claims 1 to 3,
**characterised in that** the paramagnetic ionic liquid contains cations, which are transition metal cations and/or transition metal compounds.

5. Use according to claim 4,
**characterised in that** the paramagnetic ionic liquid has the general formulas
[A]⁺[M^{+v}Xᵥ₊₁]⁻,
([A]⁺)₂[M+^{v}Xᵥ₊₂]², or
([A]⁺)₃[M+^{v}Xᵥ₊₃]³⁻,
where [A]⁺ stands for a quaternary ammonium cation [R^{1'}R¹R²R³N]⁺, a phosphonium cation [R^{1'}R¹R²R³P]⁺, a sulphonium cation [R^{1'}R¹R²S]⁺ or a heteroaromatic cation,
wherein M^{+v} is a transition metal atom having the oxidation state +v and X is an ion or a ligand having the loading number -1.

6. Use according to any one of claims 1 to 5,
**characterised in that** the paramagnetic ionic liquid comprises a solution of a paramagnetic inorganic and/or organic salt in a non-paramagnetic ionic liquid.

7. Use according to claim 6,
**characterised in that** the non-paramagnetic ionic liquid has the general formula ([A]⁺)ₐ[B]^{a-}, wherein [A]⁺ stands for a quaternary ammonium cation [R^{1'}R¹R²R³N]⁺, a phosphonium cation [R^{1'}R¹R²R³P]+, a sulphonium cation [R¹R¹R²S]⁺ or a heteroaromatic cation.

8. Use according to claim 6 or 7,
**characterised in that** the paramagnetic salt has a melting point of below 200 ° C.

9. Use according to any one of claims 1 to 5,
**characterised in that** the paramagnetic ionic liquid comprises a solution of a paramagnetic inorganic and/or paramagnetic organic salt in an ionic liquid and said paramagnetic ionic liquid has a melting point of below 200 ° C.

10. Use according to any one of claims 1 to 9,
**characterised in that** the paramagnetic ionic liquid is mixed with other functional groups and/or additives.

11. A method of extracting a component from a material to be extracted, **characterised by**:
creation an extract component by means of contacting the material to be extracted with an extraction medium comprising a paramagnetic ionic liquid containing paramagnetic ions, and
separation of the extract by means of a magnetic field.

## Revendications

1. Utilisation d'un liquide ionique paramagnétique qui contient des ions paramagnétiques comme fluide d'extraction pour une extraction, dans laquelle une isolation d'un extrait repose sur une interaction entre le fluide d'extraction et un champ magnétique.

2. Utilisation selon la revendication 1,
**caractérisée en ce que** l'extraction est une extraction liquide/liquide ou liquide/solide ou liquide/gazeux.

3. Utilisation selon la revendication 1 ou 2,
**caractérisée en ce que** le liquide ionique paramagnétique contient des anions qui sont des composés de métaux transitoires.

4. Utilisation selon une des revendications 1 à 3,
**caractérisée en ce que** le liquide ionique paramagnétique contient des cations qui sont des cations de métaux transitoires et/ou des composés de métaux transitoires.

5. Utilisation selon la revendication 4,
**caractérisée en ce que** le liquide ionique paramagnétique répond à une des formules générales
[A]⁺[M+^{v}Xᵥ₊₁]⁻,
([A]⁺)₂[M+^{v}Xᵥ₊₂]²⁻ ou
([A]⁺)₃[M+^{v}Xᵥ₊₃]³⁻,
[A]⁺ étant un cation d'ammonium quaternaire [R^{1'}R¹R²R³N]⁺, un cation de phosphonium [R^{1'}R¹R²R³P]⁺, un cation de sulfonium [R^{1'}R¹R²S]⁺ ou un cation hétéroaromatique,
M+^{v} étant un atome de métal transitoire ayant l'indice d'oxydation +v et X étant un ion ou un ligand ayant l'indice de charge -1.

6. Utilisation selon une des revendications 1 à 5,
**caractérisée en ce que** le liquide ionique paramagnétique contient une solution de sel anorganique et/ou organique paramagnétique dans un liquide ionique non paramagnétique.

7. Utilisation selon la revendication 6,
**caractérisée en ce que** le liquide ionique non paramagnétique répond à la formule générale
[A]⁺)ₐ[B]^{a-},
[A]⁺ étant un cation d'ammonium quaternaire [R^{1'}R¹R²R³N]⁺, un cation de phosphonium [R^{1'}R¹R²R³P]⁺, un cation de sulfonium [R^{1'}R¹R²S]⁺ ou un cation hétéroaromatique.

8. Utilisation selon la revendication 6 ou 7,
**caractérisée en ce que** le sel paramagnétique a un point de fusion inférieur à 200 °C.

9. Utilisation selon une des revendications 1 à 5,
**caractérisée en ce que** le liquide ionique paramagnétique contient une solution de sel anorganique et/ou organique paramagnétique dans un liquide ionique,
le liquide ionique paramagnétique ayant un point de fusion inférieur à 200 °C.

10. Utilisation selon une des revendications 1 à 9,
**caractérisée en ce que** le liquide ionique paramagnétique est transmuté avec d'autres groupes fonctionnels et/ou avec des additifs.

11. Procédé d'extraction d'un composant d'un produit d'extraction, **caractérisé par** :
la production d'un extrait du composant par mise en contact du produit d'extraction avec un fluide d'extraction qui présente un liquide ionique paramagnétique contenant des ions paramagnétiques et
l'isolation de l'extrait au moyen d'un champ magnétique.
